# EUROPEAN PATENT SPECIFICATION

(11) **EP 1 361 035 B1**
(45) Date of publication and mention of the grant of the patent: **16.11.2005**
(21) Application number: 03425271.8
(22) Date of filing: 30.04.2003
(51) Int. Cl.: B29C 45/54

(54) **Apparatus for the extrusion of plastic material, in particular for thermoplastic material to be recycled**
Vorrichtung zum Extrudieren von Kunststoffmaterial, insbesondere für zu rezyklierendes thermoplastisches Material
Dispositif pour l'extrusion de matière plastique, en particulier de matière thermoplastique à recycler

(30) Priority: 06.05.2002 IT MI20020946
(43) Date of publication of application: 12.11.2003
(73) Proprietor: P.C.R. S.R.L., 20044 Bernareggio (Milano) (IT)
(72) Inventor: Panzeri, Luca, 23871 Lomagna (Lecco) (IT)
(74) Representative: Ponzellini, Gianmarco

(56) References cited:
- DE-A- 19 535 472
- DE-A- 19 928 770
- US-A- 2 933 175
- US-A- 5 454 995
- US-A- 5 605 707
- PATENT ABSTRACTS OF JAPAN vol. 1998, no. 11, 30 September 1998 (1998-09-30) & JP 10 146858 A (M TEX MATSUMURA KK), 2 June 1998 (1998-06-02)

## Description

The present invention relates to an apparatus for the extrusion of plastic material, in particular thermoplastic material to be recycled.

It is known that extrusion apparatus for thermoplastic resins allow moulded section members and objects even of very complicated section and having different shapes and sizes to be produced, which products are used in several different sectors such as agriculture, town equipment, and building.

For example, by the extrusion of thermoplastic material it is possible to make stakes for fruit and vegetable cultivation and for earth containment, flower pots, benches, play equipment for parks, machine-tool beds, window and door frames, shelves, etc.

These extrusion apparatus generally comprise a conveying chamber having an opening for admission of the thermoplastic material in a solid state and smashed into granules, flakes, pellets and the like.

Said material is loaded into the conveying chamber by feed means consisting of a hopper for example, and is carried to an emitting nozzle by continuous transferring means consisting of, for example, a worm screw rotating internally of the conveying chamber itself.

The thermoplastic material in a solid state is melted by the heat generated by compression and friction due to the worm screw movement as well as by appropriate electric resistances usually distributed over the whole longitudinal extension of said worm screw.

An apparatus for the extrusion of plastic material, known from document US A 5 454 995, comprises a conveying chamber for the thermoplastic material having an admitting opening to receive the thermoplastic material in a solid state and at least one material-emitting nozzle; means for material transfer comprising a worm screw extending between the admitting opening and the emitting nozzle and moved by a kinematic chain connected with a first electric motor; at least one injection device disposed downstream of the emitting nozzle and adapted to operate on the compressed and liquefied material coming out of the nozzle to direct it to at least one outlet channel.

The extrusion methods and apparatus of known type briefly described above have found partial use (when suitably modified and adapted) also in plants for recycling of thermoplastic materials coming from production scraps and consumer goods such as bottles, stakes or poles and other types of articles.

The just mentioned prior art however has a serious limit: previous separation and drying is required to eliminate the impurities of the different types of thermoplastic materials of which the residual products collected for recycling are made. Also, addition of some pure product to the material for recycling is often necessary for obtaining the extrusion. Practically the high costs for these operations greatly reduce the economic advantage of productions based on use of recycle thermoplastic materials.

Under this situation, the technical task underlying the present invention is to devise an apparatus for carrying out extrusion of thermoplastic material, in particular thermoplastic material to be recycled, capable of substantially obviating the mentioned drawbacks.

Within the scope of this technical task it is an important aim of the invention to devise an extrusion apparatus enabling mixtures of thermoplastic materials to be used, in particular materials collected for recycling, practically of any type without previous separation of the different plastic resins and without any drying of same being required.

Another important aim of the invention is to devise an extrusion apparatus enabling other reinforcing materials to be associated, both in a continuous and discontinuous form, with the mixtures of thermoplastic materials, said other materials being glass fibres, iron fibres, thermosetting resins, for example.

The technical task mentioned and the aims specified are substantially achieved by an apparatus according to claim 1.

Description of a preferred but not-exclusive embodiment of an extrusion apparatus in accordance with the invention is now given with the aid of the accompanying drawings, in which:

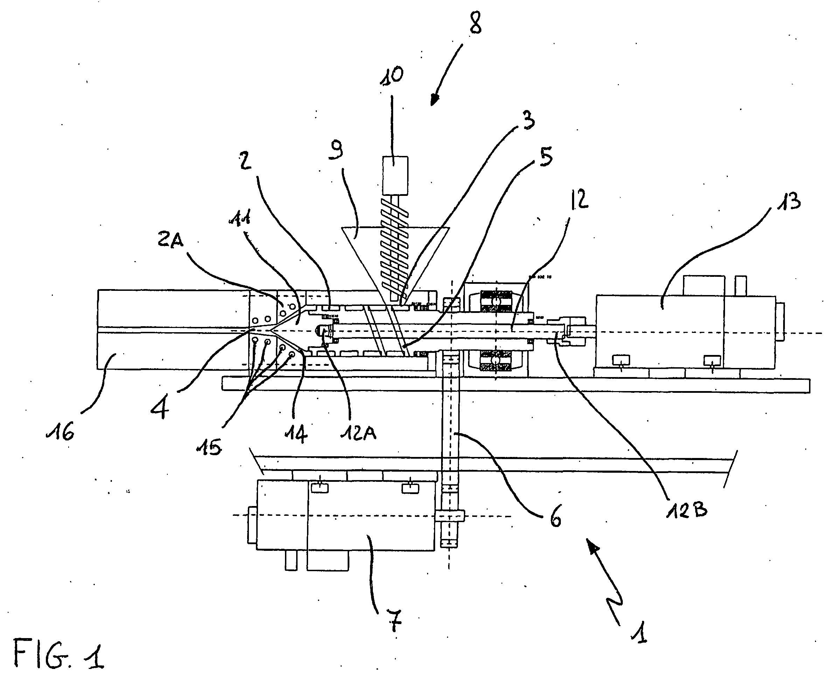

- Fig. 1 is an elevation side view showing the diagram of an extrusion apparatus in accordance with the invention;.
- Fig. 2 is a top view of the injection device included in the apparatus in Fig. 1;
- Fig. 3 is a perspective view of the apparatus in Fig. 1 inserted in a first type of extrusion plant equipped with a corrugating device;
- Fig. 4 is a perspective view of the apparatus in Fig. 1 inserted in a second type of plant adapted for pultrusion; and
- Fig. 5 is a perspective view of the apparatus in Fig. 1 inserted in a type of plant designed for injection moulding.

With reference to the drawings, the extrusion apparatus for thermoplastic material in accordance with the invention is generally identified with reference numeral 1.

It comprises a conveying chamber 2 of cylindrical shape terminally provided, at opposite positions, with an admitting opening 3 for thermoplastic material, advantageously consisting of a mixture of granules, flakes, pellets and similar fragments of several different types of plastic/thermoplastic materials,' and an emitting nozzle 4.

A means for material transfer is provided between said emitting nozzle and the admitting opening 3, internally of the conveying chamber 2, said means consisting of a worm screw 5 moved by a kinematic chain 6 comprising gear wheels and a toothed belt for example, and connected with a first electric motor 7.

The thermoplastic material is sent to the admitting opening 3 by feed means 8 consisting of a hopper 9 for example, inside which a powered Archimedean screw 10 is disposed.

The conveying chamber comprises, upstream of the emitting nozzle 4, an end portion 2A of substantially conical shape, adapted to receive a pointed ogive 11 in turn disposed downstream of the worm screw 5.

The pointed ogive 11 can be rotatably moved about a rotation axis thereof, which is coincident with the longitudinal axis of said worm screw and is defined by a support shaft 12 disposed internally of a longitudinal cavity of the worm screw 5.

The support shaft 12 comprises a first end 12A adapted for engagement with the pointed ogive 11 and a second end 12b connected with a second electric motor 13 capable of setting the pointed ogive 11 in rotation by a motion independent of that of the worm screw 5 so that the most appropriate speed adjustments can be made in connection with the thermoplastic material to be extruded and the type of section member to be made.

The conformations of the pointed ogive 11 and the wall of the end portion 2A of the conveying chamber 2 in which the pointed ogive is inserted are of such a nature that a hollow space 14 with a passage port is formed; said passage port progressively becomes smaller so as to increase compression and friction of the thermoplastic material that is pushed to the emitting nozzle 4.

Practically the region comprising the emitting nozzle and hollow space 14 defines a compression and liquefaction chamber in which the thermoplastic material conveyed by the worm screw 5 is compressed, liquefied and amalgamated.

Said compression and liquefaction chamber is maintained to a constant temperature by heating means 15 consisting of thermoregulated electric resistances.

Obviously, the rotational motion of the pointed ogive helps in carrying out the melting process through transfer of the heat generated by friction to the plastic mass.

Advantageously the plastic material inserted in the conveying chamber 2 moves forward in a solid state until close to the hollow space 14 where liquefaction begins.

In an original manner, the extrusion apparatus in accordance with the invention, upstream of the emitting nozzle 4 comprises an injection device 16 adapted to operate on the compressed and liquefied material coming out of said nozzle.

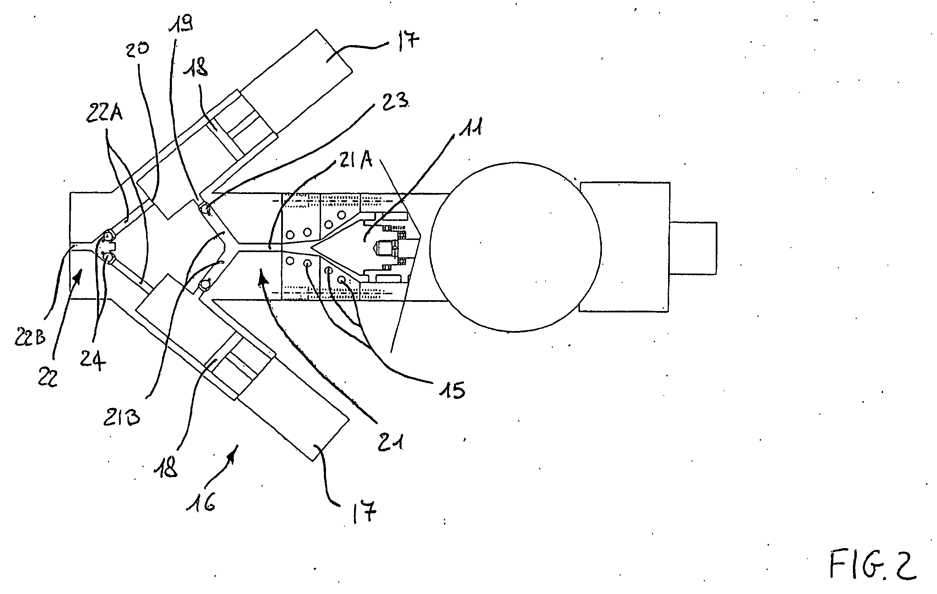

This injection device 16 (see Fig. 2) comprises at least two cylinders 17 each provided with a piston 19 and having a suction port 19 and a delivery port 20 preferably disposed on the side surface and the head of said cylinders, respectively.

Advantageously, motion of pistons 18 takes place in opposed strokes in such a manner that a forward stroke of one piston corresponds to a backward stroke of the other piston and vice versa, so that the material from the emitting nozzle 4 can be continuously sucked and can be constantly sent to the provided uses.

Pistons 18 are driven by an appropriate oil-operated control box which is able to carry out pressure variations, and are adjusted through proportional valves to keep the feeding speed during the material-injection stroke constant.

A first conveying channel 21 is provided between the emitting nozzle 4 and suction ports 19; it is formed of a common stretch 21A and two branches 21B.

Extending downstream of the delivery port 20 is a second conveying channel 22 for the compressed and liquefied material that has been submitted to a further compression step by pistons 18.

The second conveying channel 22 is divided into two first portions 22A connected with the delivery port 20 and comprises a second portion 22B into which said first portions open.

Also provided are first check valves 23 that are for example ball-shaped and inserted in the branches 21B of the first conveying channel 21, and second check valves 24 inserted in the first portions 22A of the second conveying channel 22. These valves prevent the material from flowing back into the cylinders 17 both during the suction stroke and the delivery stroke.

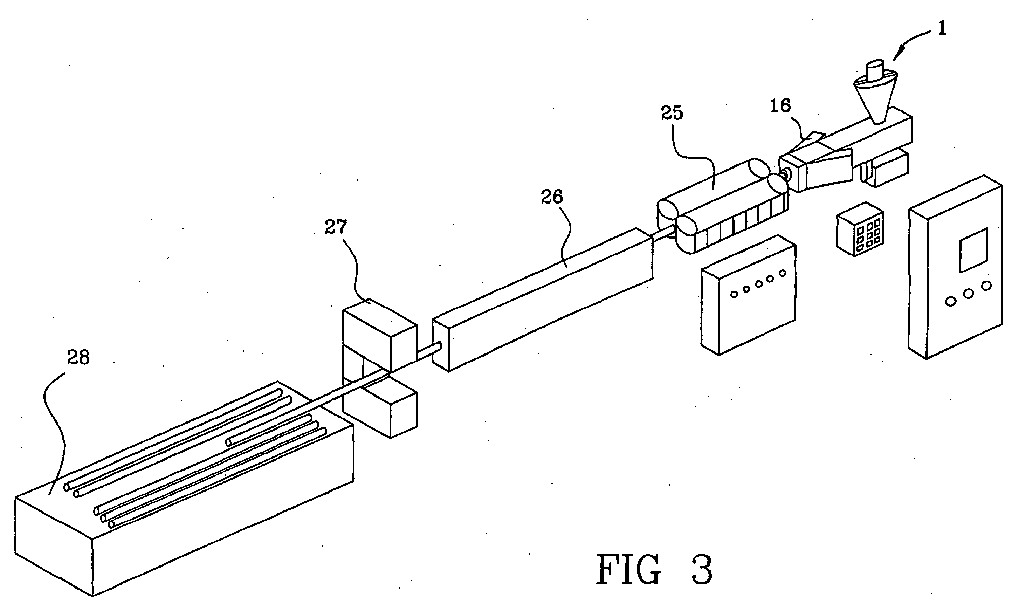

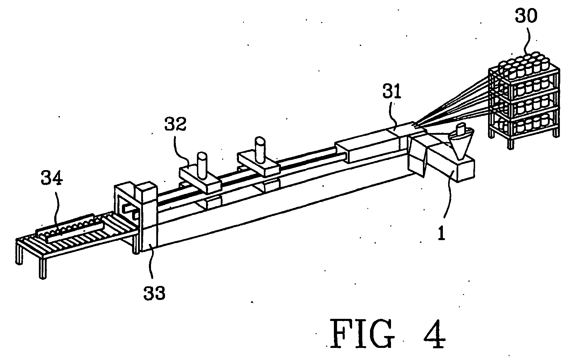

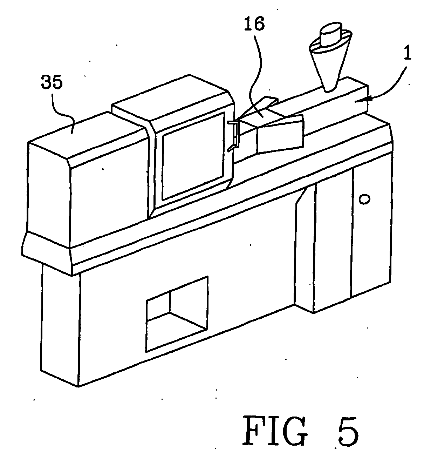

The extrusion apparatus 1 in accordance with the invention can be advantageously used in different types of production lines, in a true extrusion line, for example (see Fig. 3), in a pultrusion line (see Fig. 4) and in an injection moulding line (see Fig. 5).

In the extrusion line a corrugating device 25 is provided downstream of apparatus 1 and it consists of a series of rotating moulds of appropriate shape adapted to conveniently form the section members and help discharge of the material from the extrusion apparatus.

The section members are definitively solidified in a cooling vat 26, cut with a cutter 27 and laid on a storage support 28.

With the above described extrusion methods section members can be made using different mixtures of thermoplastic materials, also glass fillers.

The obtained section members have mechanical features typical of the extruded materials and can be applied in place of section members made of wood.

In the pultrusion line (see Fig. 4) downstream of the injection device 16 of the extrusion apparatus 1 there is insertion, through appropriate lead-in slots, of thread-guide plates and continuous reinforcing elements 29 consisting of glass threads, steel wires, carbon wires or others, coming from reel trolleys 30.

A mould 31 having one or more outlets gives the appropriate shape to the extruded material that, after consolidation, is subsequently submitted to a traction action by some draft carriages 32. An automatic cutter 33 enables pieces of different length to be obtained that are then laid in a discharge station 34.

By a pultrusion process it is possible to obtain products having features similar to those of the composite materials, apart from their chemical features exclusively depending on the type of thermoplastic mixture utilized.

In the injection-moulding line (see fig. 5) an injection press 35 is provided downstream of the extrusion apparatus 1; said press allows pieces to be produced with different mixtures of thermoplastic material, using glass fillers.

The invention achieves important advantages.

In fact the extrusion apparatus in accordance with the invention enable the most different mixtures of thermoplastic materials to be melted and amalgamated, to which material also reinforcing filler materials can be added in the form of short fibres, ground scraps and/or wires and threads without previously carrying out expensive selecting and drying operations on the thermoplastic materials coming from recycling of articles of wide consumption, for example.

It is also to be pointed out that the obtained products, in spite of their being made starting from materials having a non-homogeneous chemical structure, have very high mechanical and duration features and in some applications they are able to replace the composite materials while having a lower production cost.

It is obvious that the outer appearance of these products can be made optimal by surface application of appropriate plastic films of known type.

## Claims

1. An apparatus for the extrusion of plastic material, in particular thermoplastic material to be recycled, comprising:
- a conveying chamber (2) for the thermoplastic material having an admitting opening (3) to receive the thermoplastic material in a solid state and at least one material-emitting nozzle (4),
- means (5) for material transfer comprising a worm screw extending between said admitting opening (3) and said emitting nozzle (4) and moved by a kinematic chain (6) connected with a first electric motor (7),
- heating means (15) to heat the material admitted to the conveying chamber (2),
- at least one injection device (16) disposed downstream of the emitting nozzle (4) and adapted to operate on the compressed and liquefied material coming out of said nozzle (4) to direct it to at least one outlet channel (22B),
- a pointed ogive (11), inserted in an end portion (2A) of said conveying chamber (2), disposed at said emitting nozzle (4) downstream of said worm screw (5) and rotatably moved about a rotation axis which is coincident with a longitudinal axis of said worm screw (5);
**characterised in that** it comprises
- a support shaft (12) defining said rotation axis of the pointed ogive (11) and disposed internally of a longitudinal cavity of said worm screw (5), said support shaft (12) comprising a first end (12A) adapted to engage said pointed ogive (11) and a second end (12B) connected with a second electric motor (13).

2. An apparatus as claimed in claim 1, **characterized in that** said injection apparatus (16) comprises at least one cylinder (17) equipped with a piston (18) and having at least one suction port (19) in fluid communication with the emitting nozzle and a delivery port (20) in fluid communication with said outlet channel (22B).

3. An apparatus as claimed in claim **2, characterized in that** for each said cylinder (17) it comprises at least one first check valve (23) disposed at the suction port (19) and at least one second check valve (24) disposed at the delivery port (20).

4. An apparatus as claimed in claim **3, characterized in that** it comprises a first conveying channel (21) for the compressed and liquefied material interposed between said emitting nozzle (4) and cylinders (17) and formed of a common stretch (21A) and two branches (21B) in which said first check valves (23) are inserted.

5. An apparatus as claimed in claim **3, characterized in that** it comprises a second conveying channel (22) for the compressed and liquefied material which is disposed downstream of said cylinders (17) and consists of two first portions (22A) connected to said delivery ports (20) and one second portion, and **in that** said second check valves (24) are inserted in said first portions (22A).

6. An apparatus as claimed in claim 2, **characterized in that** said suction port (19) is disposed on the side surface of said cylinder (17) and said delivery port (20) is disposed on the head of the same cylinder (17).

7. An apparatus as claimed in claim **1, characterized in that** said pointed ogive (11) and end portion (2A) of the conveying chamber (2) cooperate with each other and form a hollow space (14) having a passage port getting progressively narrower and defining a chamber for compression and liquefaction of the thermoplastic material.

8. An apparatus as claimed in claim **7, characterized in that** said means (15) for heating the thermoplastic material is disposed close to said compression and liquefaction chamber and is preferably defined by thermoregulated resistances.

9. An apparatus as claimed in claim 1, **characterized in that** it further comprises material-feeding means (8) disposed at the admitting opening (3), said material-feeding means (8) comprising a hopper (9) and a powered Archimedean screw (10) disposed internally of the hopper itself.

## Patentansprüche

1. Vorrichtung zum Extrudieren von Kunststoffmaterial, insbesondere für zu rezyklierendes thermoplastisches Material, umfassend:
- eine Zuführkammer (2) des thermoplastischen Materials, die eine Eintrittsöffnung (3) zur Aufnahme von thermoplastischem Material im festen Zustand und mindestens eine Austrittsdüse (4) des Materials aufweist,
- Mittel (5) für die Übergabe des Materials, umfassend eine endlose Schraube, die zwischen der Eintrittsöffnung (3) und der Austrittsdüse (4) verläuft und durch eine kinematische Kette (6) angetrieben wird, die von einem ersten Elektromotor (7) ausgeht,
- Heizmittel (15) des in die Zuführkammer (2) eingebrachten Materials,
- mindestens eine Spritzvorrichtung (16), die nach der Austrittsdüse (4) angeordnet ist und auf das gepresste und verflüssigte Material am Ausgang aus der Austrittsdüse (4) wirkt, um es in Richtung mindestens eines Austrittskanals (22B) auszurichten,
- einen Spitzbogen (11), eingebracht in einem Endabschnitt (2A) der Zuführkammer (2), der im Bereich der Austrittsdüse (4) nach der endlosen Schraube (5) angeordnet und um eine Drehachse gedreht wird, die mit einer Längsachse der endlosen Schraube (5) zusammenfällt;
**dadurch gekennzeichnet, dass** sie umfasst:
- eine Lagerwelle (12), welche die Drehachse des Spitzbogens (11) festlegt und innerhalb einer Längsausnehmung der endlosen Schraube (5) angeordnet ist, wobei die Lagerwelle (12) ein erstes Ende (12A), zum Ergreifen des Spitzbogens (11), und ein zweites Ende (12B) umfasst, das mit einem zweiten Elektromotor (13) verbunden ist.

2. Vorrichtung nach Anspruch 1, **dadurch gekennzeichnet, dass** die Spritzvorrichtung (16) mindestens einen Zylinder (17) umfasst, der mit einem Kolben (18) versehen ist und mindestens eine Ansaugöffnung (19) in fluidodynamischer Verbindung mit der Austrittsdüse und eine Drucköffnung (20) in fluidodynamischer Verbindung mit dem Austrittskanal (22B) aufweist.

3. Vorrichtung nach Anspruch 2, **dadurch gekennzeichnet, dass** für jeden Zylinder (17) mindestens ein Rückschlagventil (23), das im Bereich der Ansaugöffnung (19) angeordnet ist, und ein zweites Rückschlagventil (24) umfasst, das im Bereich der Drucköffnung (20) angeordnet ist.

4. Vorrichtung nach Anspruch 3, **dadurch gekennzeichnet, dass** sie einen ersten Zuführkanal (21) des gepressten und verflüssigten Materials umfasst, der zwischen der Austrittsdüse (4) und den genannten Zylindern (17) zwischengeschaltet ist und durch einen gemeinsamen Abschnitt (21A) und zwei Abzweigungen (21B) gebildet ist, in denen die ersten Rückschlagventile eingesetzt sind.

5. Vorrichtung nach Anspruch 3, **dadurch gekennzeichnet, dass** sie einen zweiten Zuführkanal (22) des gepressten und verflüssigten Materials umfasst, der nach den Zylindern (17) angeordnet und aus zwei ersten Abschnitten (22A), die mit den Drucköffnungen (20) verbunden sind, und aus einem zweiten Abschnitt besteht, und **dadurch**, dass die zweiten Rückschlagventile (24) in den ersten Abschnitten (22A) eingesetzt sind.

6. Vorrichtung nach Anspruch 2, **dadurch gekennzeichnet, dass** die Ansaugöffnung (19)an der Seitenfläche des Zylinders (17) und die Drucköffnung (20) am Kopf des Zylinders (17) selbst angeordnet ist.

7. Vorrichtung nach Anspruch 1, **dadurch gekennzeichnet, dass** der Spitzbogen (11) und der Endabschnitt (2A) der Zuführkammer (2) miteinander zusammenwirken und einen Zwischenraum (14) bilden, der eine Durchgangsöffnung aufweist, die sich allmählich verengt und eine Druck- und Verflüssigungskammer des thermoplastischen Materials festlegt.

8. Vorrichtung nach Anspruch 7, **dadurch gekennzeichnet, dass** die Heizmittel (15) des thermoplastischen Materials in der Nähe der Druck- und Verflüssigungskammer angeordnet sind und bevorzugter Weise durch wärmeregulierte Widerstände festgelegt sind.

9. Vorrichtung nach Anspruch 1, **dadurch gekennzeichnet, dass** sie überdies Zuführmittel (8) des Materials umfasst, die im Bereich der Eintrittsöffnung (3) angeordnet sind, wobei die Zuführmittel des Materials (8) einen Trichter (9) und eine angetriebene Schnecke (10) umfassen, die innerhalb des Trichters selbst angeordnet ist.

## Revendications

1. Dispositif pour l'extrusion de matière plastique, en particulier de matière thermoplastique à recycler, comprenant:
- une chambre d'acheminement de la matière thermoplastique ayant une ouverture d'amenée (3) pour recevoir la matière thermoplastique à l'état solide et au moins une tuyère d'émission de matière (4),
- des moyens (5) de transfert de la matière comprenant une vis sans fin s'étendant entre ladite ouverture d'amenée (3) et ladite tuyère d'émission (4) et mue par une chaîne cinématique (6) reliée à un premier moteur électrique (7),
- des moyens chauffants (15) pour chauffer la matière introduite dans la chambre d'acheminement (2),
- au moins un dispositif d'injection (16) disposé à l'aval de la tuyère d'émission (4) et destiné à opérer sur la matière comprimée et liquéfiée sortant de ladite tuyère (4) pour la diriger vers au moins un canal de sortie (22B),
- une ogive pointue (11), insérée dans une portion terminale (2A) de ladite chambre d'acheminement (2), disposée en correspondance avec ladite tuyère d'émission (4) à l'aval de ladite vis sans fin (5) et mue en rotation autour d'un axe de rotation qui coïncide avec l'axe longitudinal de ladite vis sans fin (5);
**caractérisé en ce qu'**il comporte:
- un arbre support (12) définissant ledit axe de rotation de l'ogive pointue (11) et disposé à l'intérieur d'une cavité longitudinale de ladite vis sans fin (5), ledit arbre support (12) comprenant une première extrémité (12A) destinée à engager ladite ogive pointue (11) et une deuxième extrémité (12B) reliée à un deuxième moteur électrique.

2. Dispositif selon la revendication 1, **caractérisé en ce que** ledit dispositif d'injection (16) comporte au moins un cylindre (17) muni d'un piston (18) et ayant au moins une lumière d'aspiration (19) en communication de fluide avec la tuyère d'émission et une lumière de refoulement (20) en communication de fluide avec ledit canal de sortie (22B).

3. Dispositif selon la revendication 2, **caractérisé en ce qu'**il comporte, pour chaque cylindre susdit (17), au moins une première soupape de retenue (23) disposée en correspondance avec la lumière d'aspiration (19) et au moins une deuxième soupape de retenue (24) disposée en correspondance avec la lumière de refoulement (20).

4. Dispositif selon la revendication 3, **caractérisé en ce qu'**il comporte un premier canal d'acheminement (21) de la matière comprimée et liquéfiée interposé entre ladite tuyère d'émission (4) et les cylindres (17) et formé d'un tronçon commun (21A) et de deux branches (21B) où sont insérées lesdites premières soupapes de retenue (23).

5. Dispositif selon la revendication 3, **caractérisé en ce qu'**il comporte un deuxième canal d'acheminement (22) de la matière comprimée et liquéfiée qui est disposé à l'aval desdits cylindres (17) et se compose de deux premières portions (22A) reliées auxdites lumières de refoulement (20) et d'une deuxième portion, et **en ce que** lesdites deuxièmes soupapes de retenue (24) sont insérées dans lesdites premières portions.

6. Dispositif selon la revendication 2, **caractérisé en ce que** ladite lumière d'aspiration (19) est disposée sur la surface latérale dudit cylindre (17) et ladite lumière de refoulement (20) est disposée sur la tête du même cylindre (17).

7. Dispositif selon la revendication 1, **caractérisé en ce que** ladite ogive pointue (11) et ladite portion terminale (2A) de la chambre d'acheminement (2) coopèrent réciproquement et forment un espace vide (14) ayant une lumière de passage qui se rétrécit progressivement et définit une chambre de compression et liquéfaction de la matière thermoplastique.

8. Dispositif selon la revendication 7, **caractérisé en ce que** lesdits moyens de chauffage (15) de la matière thermoplastique sont disposés proches de ladite chambre de compression et liquéfaction et sont de préférence définis par des résistances thermoréglées.

9. Dispositif selon la revendication 1, **caractérisé en ce qu'**il comporte en outre des moyens d'alimentation de la matière (8) disposés en correspondance avec l'ouverture d'amenée (3), lesdits moyens d'alimentation de la matière (8) comprenant une trémie (9) et une vis d'Archimède motorisée (10) disposée à l'intérieur de la trémie elle-même.
